# EUROPEAN PATENT APPLICATION

(11) **EP 4 614 439 A1**
(43) Date of publication of application: **10.09.2025**
(21) Application number: 23931769.6
(22) Date of filing: 02.11.2023
(51) Int. Cl.: G06T 7/33, G06T 17/00, G06V 10/774, G06V 10/46

(54) **THREE-DIMENSIONAL MODEL PROCESSING METHOD AND APPARATUS, AND ELECTRONIC DEVICE AND COMPUTER STORAGE MEDIUM**

(30) Priority: 07.04.2023 CN 202310362892
(71) Applicant: Tencent Technology (Shenzhen) Company Limited, Shenzhen, Guangdong 518057 (CN)
(72) Inventor: QIU, Weibin, Shenzhen, Guangdong 518057 (CN)
(74) Representative: Gunzelmann, Rainer
(86) International application number: PCT/CN2023/129432
(87) International publication number: WO 2024/207722

(57) **Abstract**

Provided in the present application are a three-dimensional model processing method and apparatus, and an electronic device, a computer program product and a computer-readable storage medium. The method comprises: performing key-point detection on a first three-dimensional sample model, so as to obtain patch indexes and barycentric coordinates of patches where a plurality of key points of the first three-dimensional sample model are located, and determining three-dimensional spatial coordinates of each key point; performing displacement processing on the three-dimensional spatial coordinates of each key point in the first three-dimensional sample model, so as to obtain a plurality of second three-dimensional sample models; combining the plurality of second three-dimensional sample models and the first three-dimensional sample model into a sample model set; and training an initialized key-point detection model on the basis of the sample model set, so as to obtain a trained key-point detection model, wherein the trained key-point detection model is used for performing key-point detection on a first three-dimensional model to be registered, and a key-point detection result is used for executing non-rigid deformable registration processing.

## Description

### RELATED APPLICATION

This application is based upon and claims priority to Chinese Patent Application No. 202310362892.9, filed on April 07, 2023, which is incorporated herein by reference in its entirety.

### FIELD OF THE TECHNOLOGY

The present disclosure relates to the field of computer technologies, and in particular, to a method and an apparatus for three-dimensional model processing, an electronic device, and a storage medium.

### BACKGROUND OF THE DISCLOSURE

Artificial intelligence (AI) is a theory, method, technology, and application system that uses a digital computer or a machine controlled by the digital computer to simulate, extend, and expand human intelligence, perceive an environment, obtain knowledge, and use knowledge to obtain an optimal result. In other words, artificial intelligence is a comprehensive technology in computer science and attempts to understand the essence of intelligence and produce a new intelligent machine that can react in a manner similar to human intelligence. Artificial intelligence is to study the design principles and implementation methods of various intelligent machines, to enable the machines to have the functions of perception, reasoning, and decision-making.

Registration of a three-dimensional model is to deform a form of one three-dimensional model into a form of another three-dimensional model. In the related art, the registration of a three-dimensional model needs to manually label key points in the model, which has low efficiency and low accuracy of manual labeling, thereby affecting a registration effect.

There is no three-dimensional model registration solution with high accuracy in the related art.

### SUMMARY

Embodiments of the present disclosure provide a three-dimensional model processing method and apparatus, an electronic device, a computer-readable storage medium, and a computer program product, to improve accuracy of registration between three-dimensional models.

Technical solutions in the embodiments of the present disclosure are implemented as follows.

An embodiment of the present disclosure provides a three-dimensional model processing method. The method is performed by an electronic device. The method includes:
performing key point detection on a first sample three-dimensional model, to obtain a patch index and barycentric coordinates of a respective patch in which each of a plurality of key points of the first sample three-dimensional model is located;
determining three-dimensional space coordinates of each key point based on the patch index and the barycentric coordinates of each key point;
displacing the three-dimensional space coordinates of each key point in the first sample three-dimensional model, to obtain a plurality of second sample three-dimensional models;
combining the a plurality of second sample three-dimensional models and the first sample three-dimensional model into a sample model set; and
training an initialized key point detection model based on the sample model set, to obtain a trained key point detection model, where the trained key point detection model is configured for performing key point detection on a first to-be-registered three-dimensional model, and a key point detection result of the first to-be-registered three-dimensional model is configured for performing non-rigid deformation registration.

An embodiment of the present disclosure provides a three-dimensional model processing method. The method is performed by an electronic device. The method includes:
obtaining a trained key point detection model, where the trained key point detection model is obtained by training using the three-dimensional model processing method according to this embodiment of the present disclosure;
obtaining a second to-be-registered three-dimensional model and a second reference three-dimensional model;
separately performing key point detection on the second to-be-registered three-dimensional model and the second reference three-dimensional model, to obtain key point information of the second to-be-registered three-dimensional model and key point information of the second reference three-dimensional model, where the key point information includes: a patch index of a respective patch in which each key point is located, and barycentric coordinates of the patch; and
performing non-rigid deformation registration on the key point information of the second to-be-registered three-dimensional model by using the key point information of the second reference three-dimensional model as a registration reference object, to obtain a registered second to-be-registered three-dimensional model.

An embodiment of the present disclosure provides a three-dimensional model processing apparatus, including the following modules.

A detection module is configured to perform key point detection on a first sample three-dimensional model, to obtain a patch index and barycentric coordinates of a respective patch in which a plurality of key points of the first sample three-dimensional model are located.

The detection module is configured to determine three-dimensional space coordinates of each key point based on the patch index and the barycentric coordinates of each key point.

A data enhancement module is configured to displace the three-dimensional space coordinates of each key point in the first sample three-dimensional model, to obtain a plurality of second sample three-dimensional models.

The data enhancement module is configured to combine the a plurality of second sample three-dimensional models and the first sample three-dimensional model into a sample model set.

A training module is configured to train an initialized key point detection model based on the sample model set, to obtain a trained key point detection model, where the trained key point detection model is configured for performing key point detection on a first to-be-registered three-dimensional model, and a key point detection result of the first to-be-registered three-dimensional model is configured for performing non-rigid deformation registration.

An embodiment of the present disclosure provides a three-dimensional model processing apparatus, including the following modules.

A detection module is configured to obtain a trained key point detection model, where the trained key point detection model is obtained by training using the three-dimensional model processing method according to this embodiment of the present disclosure.

The detection module is configured to obtain a second to-be-registered three-dimensional model and a second reference three-dimensional model.

The detection module is configured to separately perform key point detection on the second to-be-registered three-dimensional model and the second reference three-dimensional model, to obtain key point information of the second to-be-registered three-dimensional model and key point information of the second reference three-dimensional model, where the key point information includes: a patch index of a respective patch in which each key point is located, and barycentric coordinates of the patch.

A registration module is configured to perform non-rigid deformation registration on the key point information of the second to-be-registered three-dimensional model by using the key point information of the second reference three-dimensional model as a registration reference object, to obtain a registered second to-be-registered three-dimensional model.

An embodiment of the present disclosure provides an electronic device. The electronic device includes:
a memory, configured to store computer-executable instructions; and
a processor, configured to implement, when executing the computer-executable instructions stored in the memory, the three-dimensional model processing method provided in this embodiment of the present disclosure.

An embodiment of the present disclosure provides a computer-readable storage medium, having computer-executable instructions stored therein. The computer-executable instructions, when executed by a processor, implement the three-dimensional model processing method provided in this embodiment of the present disclosure.

An embodiment of the present disclosure provides a computer program product, including computer programs or computer-executable instructions. The computer programs or the computer-executable instructions, when executed by a processor, implement the three-dimensional model processing method provided in this embodiment of the present disclosure.

The embodiments of the present disclosure have the following beneficial effects.

Key point detection is performed on a sample three-dimensional model by using a key point detection model, to obtain key point information corresponding to the sample three-dimensional model, and a position of the key point is moved, to generate a large quantity of new sample three-dimensional models, thereby improving key point labeling efficiency, enriching training data sets, saving computing resources required for obtaining labeled data, and improving accuracy of training the key point detection model. Key point information of a to-be-registered model is obtained based on a trained key point detection model, so that accuracy of three-dimensional model registration based on the key point information can be improved, thereby improving model registration efficiency.

### BRIEF DESCRIPTION OF THE DRAWINGS

FIG. 1 is a schematic diagram of an application mode of a three-dimensional model processing method according to an embodiment of the present disclosure.
FIG. 2A is a schematic structural diagram of an electronic device according to an embodiment of the present disclosure.
FIG. 2B is a schematic structural diagram of a key point detection model according to an embodiment of the present disclosure.
FIG. 3A is a first schematic flowchart of a three-dimensional model processing method according to an embodiment of the present disclosure.
FIG. 3B is a second schematic flowchart of a three-dimensional model processing method according to an embodiment of the present disclosure.
FIG. 3C is a third schematic flowchart of a three-dimensional model processing method according to an embodiment of the present disclosure.
FIG. 3D is a fourth schematic flowchart of a three-dimensional model processing method according to an embodiment of the present disclosure.
FIG. 3E is a fifth schematic flowchart of a three-dimensional model processing method according to an embodiment of the present disclosure.
FIG. 4A is a schematic structural diagram of a key point detection model according to an embodiment of the present disclosure.
FIG. 4B is a sixth schematic flowchart of a three-dimensional model processing method according to an embodiment of the present disclosure.
FIG. 5A is a schematic diagram of position transfer of key points according to an embodiment of the present disclosure.
FIG. 5B is a schematic diagram of a three-dimensional model after position transfer of key points according to an embodiment of the present disclosure.
FIG. 6A is a schematic diagram of a first human-computer interaction interface according to an embodiment of the present disclosure.
FIG. 6B is a schematic diagram of a second human-computer interaction interface according to an embodiment of the present disclosure.
FIG. 7 is a schematic diagram of a registered three-dimensional model according to an embodiment of the present disclosure.
FIG. 8 is a schematic flowchart of a three-dimensional model processing method according to an embodiment of the present disclosure.
FIG. 9A is a schematic diagram of a key point detection result according to an embodiment of the present disclosure.
FIG. 9B is a schematic diagram of a registration result according to an embodiment of the present disclosure.

### DESCRIPTION OF EMBODIMENTS

To make the objectives, technical solutions, and advantages of the present disclosure clearer, the following describes the present disclosure in further detail with reference to the accompanying drawings. The described embodiments are not to be considered as a limitation to the present disclosure. All other embodiments obtained by a person of ordinary skill in the art without creative efforts fall within the protection scope of the present disclosure.

In the following description, reference is made to "some embodiments" which describe a subset of all possible embodiments. However, "some embodiments" may be the same subset or different subsets of all possible embodiments and may be combined with each other without conflict.

In the following description, the terms "first", "second", and "third" are merely intended to distinguish between similar objects rather than describe specific orders. The terms "first", "second", and "third" may, where permitted, be interchangeable in a particular order or sequence, so that embodiments of the present disclosure described herein may be performed in an order other than that illustrated or described herein.

In the embodiments of the present disclosure, relevant data such as user information and user feedback data is involved. When the foregoing embodiments of the present disclosure are applied to a specific product or technology, user permission or consent needs to be obtained, and collection, use, and processing of the relevant data need to comply with relevant laws, regulations, and standards of relevant countries and regions.

Unless otherwise defined, meanings of all technical and scientific terms used in this specification are the same as those usually understood by a person skilled in the art to which the present disclosure belongs. Terms used in the specification are merely intended to describe objectives of the embodiments of the present disclosure, but are not intended to limit the present disclosure.

Before the embodiments of the present disclosure are further described in detail, a description is made on nouns and terms in the embodiments of the present disclosure, and the nouns and terms in the embodiments of the present disclosure are applicable to the following explanations.
1) A three-dimensional mesh model (Mesh) refers to a manifolded surface having a topological structure (a graph of relationships between points and lines). For example, a spherical surface is divided into a combination of a plurality of vertexes and a plurality of edges. In this embodiment of the present disclosure, a three-dimensional face mesh model is used as an example for description. A three-dimensional mesh is a graph structure, and a patch is a smallest unit to be segmented in the three-dimensional mesh.
2) Three-dimensional face key point detection refers to detecting three-dimensional coordinates of a series of face key points with preset semantics by giving any three-dimensional face mesh model. The quantity of vertexes and the quantity of patches of the three-dimensional face model are not limited. A key point refers to position information in a specific meaning. The key point with preset semantics refers to position information in a specific meaning that is preset for a face, including: an eye corner, a mouth corner, a nose tip, a face contour, or other position information. The semantics and the quantity of key points are determined by a specific task.
3) Rigid deformation registration is deformation registration in which after registration between two three-dimensional mesh models is performed, a shape and a size of the three-dimensional mesh model do not change, but only a spatial position and a posture are changed.
4) Non-rigid deformation registration is deformation registration in which after an original three-dimensional mesh model is deformed into a form of another three-dimensional mesh model, an original topological structure (a connection relationship between points) of the original three-dimensional mesh model is kept. For example, a three-dimensional mesh model A is deformed into a form of another three-dimensional mesh model B, and an original topological structure of the model A is kept (a connection relationship between points in the model A is maintained). The topological structures of the models A and B are different. To be specific, the quantity of vertexes and a vertex connection relationship are different. There is a significant difference between the non-rigid deformation registration and the rigid deformation registration. The rigid deformation registration performs only overall rotation and shift transformation, and does not change a local form of a model. However, the non-rigid deformation registration requires local form conforming.
5) A convolutional neural network (CNN) is a type of feed forward neural network (FNN) that includes convolutional calculation and has a deep structure, and is one of representative algorithms of deep learning. The convolutional neural network has a representation learning capability, and can perform shift-invariant classification on an input image according to a hierarchical structure thereof.
6) A multilayer perceptron (MLP) is also referred to as an artificial neural network (ANN). In addition to an input/output layer, a plurality of hidden layers may be included therein.

Embodiments of the present disclosure provide a three-dimensional model processing method, a three-dimensional model processing apparatus, an electronic device, a computer-readable storage medium, and a computer program product, to improve accuracy of registration between three-dimensional models.

The following describes an exemplary application of the electronic device provided in this embodiment of the present disclosure. The electronic device provided in this embodiment of the present disclosure may be implemented as various types of user terminals, such as a notebook computer, a tablet computer, a desktop computer, a set-top box, a mobile device (for example, a mobile phone, a portable music player, a personal digital assistant, a dedicated messaging device, or a portable game device), an in-vehicle terminal, a virtual reality (VR) device, and an augmented reality (AR) device, or may be implemented as a server. Exemplary applications are described below when the device is implemented as a terminal device or a server.

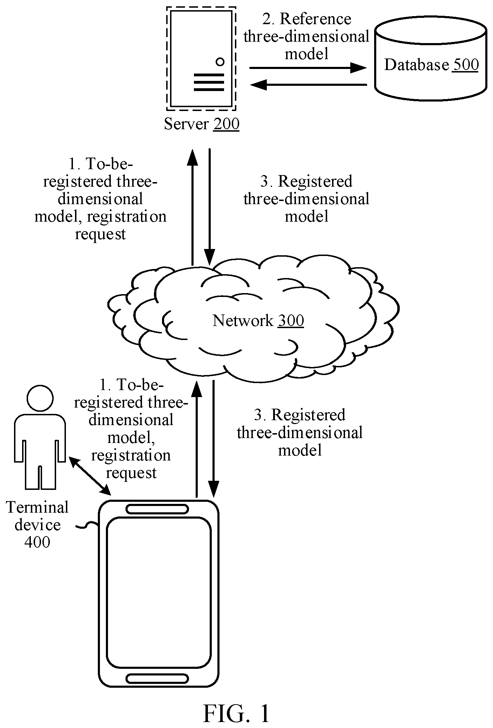

Refer to FIG. 1. FIG. 1 is a schematic diagram of an application mode of a three-dimensional model processing method according to an embodiment of the present disclosure. For example, a server 200, a network 300, a terminal device 400, and a database 500 are involved in FIG. 1. The terminal device 400 is connected to the server 200 via the network 300. The network 300 may be a wide area network or a local area network, or a combination of both.

In some embodiments, the database 500 stores a large quantity of three-dimensional models. The server 200 may be a server of a three-dimensional model registration platform, a game engine server, or the like. The terminal device 400 is a terminal device used by a skilled person or a non-skilled person. The three-dimensional model used as registration reference may be stored in the database 500 or uploaded by a user using the terminal device 400. Descriptions are provided below with reference to the foregoing examples.

For example, the user uploads a to-be-registered three-dimensional model to the server 200 by using the terminal device 400 through the network 300, and transmits a registration request. The registration request carries an identifier of the three-dimensional model used as registration reference. The server 200 invokes the three-dimensional model processing method provided in this embodiment of the present disclosure, obtains the three-dimensional model used as registration reference from the database 500, invokes a trained key point detection model to detect a key point of the to-be-registered three-dimensional model, to obtain key point information, and registers the to-be-registered three-dimensional model and the three-dimensional model used as registration reference based on the key point information, to obtain a registered three-dimensional model. Display data of the registered three-dimensional model is transmitted to the terminal device 400. The registered three-dimensional model is presented in the terminal device 400.

In some embodiments, the three-dimensional model processing method provided in this embodiment of the present disclosure may further be applied to the following application scene: three-dimensional animation production. For example, a skeleton animation produced based on a model A is obtained in advance. A type of the model A may be a person, an animal, or a machine. A skilled person invokes the three-dimensional model processing method provided in this embodiment of the present disclosure. A model B is a three-dimensional model having a same type and a different shape from that of the model A. The model B is registered with the model A, and the registered model B is driven by using the skeleton animation corresponding to the model A, to form a new three-dimensional animation.

This embodiment of the present disclosure may be implemented through computer vision (CV). The computer vision is a science that studies how to make a machine "see", and refers to using a camera and a computer to replace human eyes to perform machine vision such as recognition and measurement on a target, and further perform graphics processing, so that the computer processes an image that is more suitable for human eyes, to observe or transmit the image to an instrument for detection. As a scientific discipline, the computer vision studies related theories and technologies and attempts to establish an artificial intelligence system that can obtain information from images or multidimensional data. The computer vision generally includes technologies such as image processing, image recognition, image semantic understanding, image retrieval, OCR, video processing, video semantic understanding, video content/behavior recognition, three-dimensional object reconstruction, a 3D technology, virtual reality, augmented reality, synchronous positioning, and map construction, and further includes common biometric feature recognition technologies such as face recognition and fingerprint recognition.

This embodiment of the present disclosure may be implemented by using the block chain technology. The key point detection model obtained through training in this embodiment of the present disclosure may be uploaded to the block chain for storage, to ensure reliability of the key point detection model by using a consensus algorithm. The block chain is a new application mode of a computer technology such as distributed data storage, point-to-point transmission, consensus mechanism, and an encryption algorithm. The block chain is essentially a decentralized database, and is a string of data blocks generated in association using a cryptographic method. Each data block contains information about a batch of network transactions, for verifying validity of the information (anti-counterfeiting) and generating a next block. The block chain may include a block chain underlying platform, a platform product service layer, and an application service layer.

This embodiment of the present disclosure may be implemented by using a database technology. A database may be briefly considered as a place in which an electronic file cabinet stores electronic files. A user may perform operations such as adding, querying, updating, and deleting data in the files. The so-called "database" is a data set that is stored together in a certain mode, can be shared with a plurality of users, has as little redundancy as possible, and is independent of an application.

A database management system (DBMS) is a computer software system designed for managing a database, and generally has basic functions such as storage, interception, security guarantee, and backup. The database management system may classify a database model supported by the database management system, for example, relational, or extensible markup language (XML), or classify the database model according to supported computer types, such as a server cluster or a mobile phone, or classify the database model according to a used query language, for example, structured query language (SQL) or XQuery, or classify the database model according to performance impulses, for example, a maximum scale and a highest running speed, or adopt another classification mode. Regardless of a classification mode, some DBMSs can implement cross-category, for example, support a plurality of query languages at the same time.

In this embodiment of the present disclosure, a cloud technology may be adopted for implementation. The cloud technology is a collective name of a network technology, an information technology, an integration technology, a platform management technology, an application technology, and the like based on an application of a cloud computing business mode, and may form a resource pool, which is used as required, and is flexible and convenient. The cloud computing technology is to become an important support. Back-end services of a technology network system require a huge amount of computing and storage resources, such as video websites, image websites, and more portal websites. Accompanied with the high-level development and application of the Internet industry, as well as the demand for search services, social networks, mobile commerce, and open collaboration, every item may have its own hash code identification mark in the future, which needs to be transmitted to a back-end system for logical processing. Data at different levels may be processed separately, and various types of industry data require strong system back support, which can only be implemented through cloud computing.

In some embodiments, the server may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a CDN, big data, and an artificial intelligence platform. The electronic device may be a smartphone, a tablet computer, a notebook computer, a desktop computer, a smart speaker, a smartwatch, or the like, but is not limited thereto. The terminal device may be connected directly or indirectly to the server in a wired or wireless communication mode. This is not limited in the present disclosure.

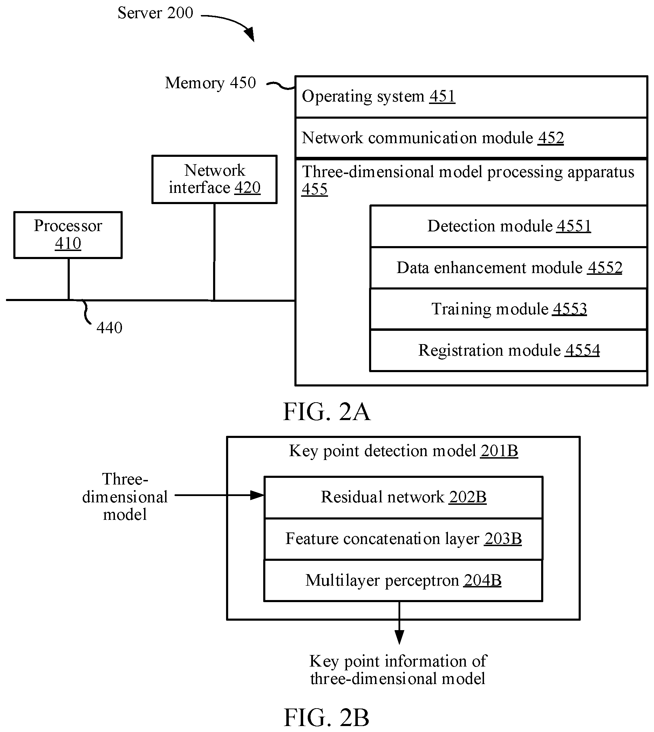

Refer to FIG. 2A. FIG. 2A is a schematic structural diagram of an electronic device according to an embodiment of the present disclosure. The electronic device shown in FIG. 2A may be a server 200. The server 200 includes: at least one processor 410, a memory 450, and at least one network interface 420. Components in the server 200 are coupled by a bus system 440. The bus system 440 is configured to implement connection and communication between the components. In addition to a data bus, the bus system 440 further includes a power bus, a control bus, and a state signal bus. However, for clear description, various types of buses in FIG. 2A are marked as the bus system 440.

The processor 410 may be an integrated circuit chip with a signal processing capability, such as a general-purpose processor, a digital signal processor (DSP), or another programmable logic device, discrete gate, transistor logic device, or discrete hardware component. The general-purpose processor may be a microprocessor, any conventional processor, or the like.

The memory 450 may be removable, non-removable, or a combination thereof. For example, a hardware device includes a solid-state memory, a hard disk drive, an optical drive, and the like. The memory 450 includes one or more storage devices physically located away from the processor 410.

The memory 450 includes a volatile memory or a non-volatile memory, or may include both a volatile memory and a non-volatile memory. The non-volatile memory may be a read only memory (ROM), and the volatile memory may be a random access memory (RAM). The memory 450 described in this embodiment of the present disclosure is intended to include any suitable types of memories.

In some embodiments, the memory 450 can store data to support various operations. Examples of the data include a program, a module, and a data structure, or a subset or a superset thereof, which are described below by using example.

An operating system 451 includes a system program configured for processing various basic system services and performing hardware-related tasks, such as a frame layer, a core library layer, and a drive layer, and is configured to implement various basic services and process hardware-based tasks.

A network communication module 452 is configured to reach another electronic device via one or more (wired or wireless) network interfaces 420. For example, the network interface 420 includes: Bluetooth, wireless fidelity (WiFi), a universal serial bus (USB), and the like.

In some embodiments, the apparatus provided in this embodiment of the present disclosure may be implemented in a software mode. FIG. 2A shows a three-dimensional model processing apparatus 455 stored in the memory 450. The apparatus may be software in the form of a program and a plug-in, and the like, and includes the following software modules: a detection module 4551, a data enhancement module 4552, a training module 4553, and a registration module 4554. These modules are logical, so that the modules may be arbitrarily combined or further split according to implemented functions. The functions of the modules are described below.

The following describes a three-dimensional model processing method provided in an embodiment of the present disclosure. As stated above, an electronic device for implementing the three-dimensional model processing method in this embodiment of the present disclosure may be a terminal, a server, or a combination of both. Therefore, an execution body of each operation is not repeatedly described below.

The following example of three-dimensional model registration is described by using an example in which a three-dimensional model is a human head model. A person skilled in the art may apply, according to the following understanding, the three-dimensional model processing method provided in this embodiment of the present disclosure to other types of three-dimensional model registration processing. For example, the registration is performed on a three-dimensional model of a type such as an animal, a robot, a human, or a virtual object.

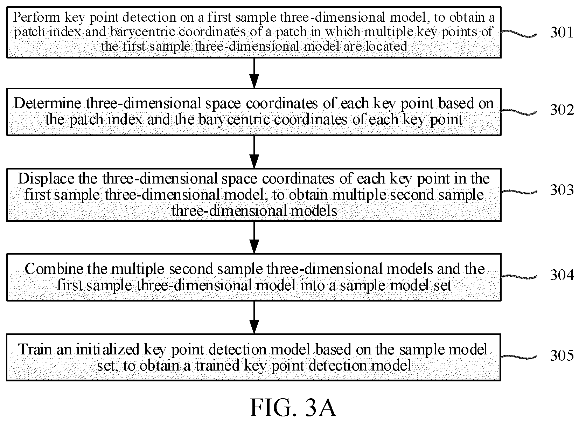

Refer to FIG. 3A. FIG. 3A is a first schematic flowchart of a three-dimensional model processing method according to an embodiment of the present disclosure. The method is described with operations shown in FIG. 3A.

In operation 301, key point detection is performed on a first sample three-dimensional model, to obtain a patch index and barycentric coordinates of a respective patch in which each of a plurality of key points of the first sample three-dimensional model is located.

For example, the key point is a point in the three-dimensional model that is used as a position reference and a labeling area. For example, in face recognition, key points of a face are labels for positioning facial features and a facial contour. The patch in which the key points are located is a triangular patch, and the key points in the triangular patch may be expressed by using coordinates of three vertexes and non-negative coefficients α, β, and γ. A shape of the patch of the three-dimensional model may be a triangle, a quadrangle, or the like. In this embodiment of the present disclosure, the triangular patch is used as an example for description.

It is assumed that three vertexes of a triangle are a point A, a point B, and a point C. Any point of a plane of the triangle may be represented by a linear combination of three coordinates of the triangle. To be specific, the key points in the triangular patch may be expressed by using coordinates of three vertexes and non-negative coefficients α, β, and y. The formula of the barycentric coordinates may be represented as: (x, y)=αA+βB+γC, and α+β+γ=1, where (α, β, γ) is referred to as barycentric coordinates of a point (x, y).

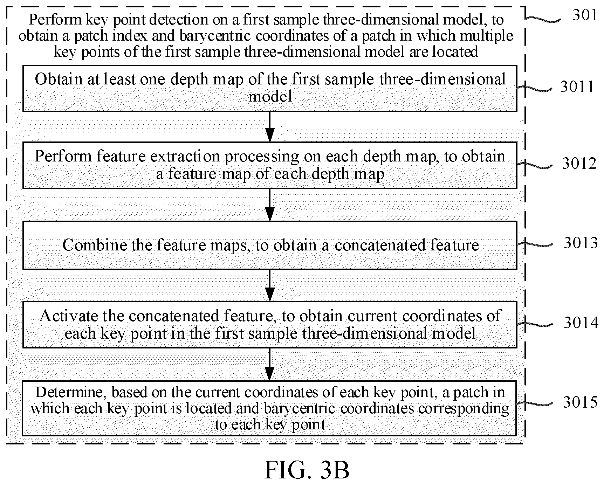

In some embodiments, refer to FIG. 3B. FIG. 3B is a second schematic flowchart of a three-dimensional model processing method according to an embodiment of the present disclosure. Operation 301 in FIG. 3A may be implemented through operations 3011 to 3015 in FIG. 3B, which are described below in detail.

In operation 3011, at least one depth map of the first sample three-dimensional model is obtained.

For example, each depth map is obtained from a different direction of the first sample three-dimensional model. Types of the directions include front, side, and rear. Using a three-dimensional model of a human head as an example, a depth map of the three-dimensional model is obtained from the front, and a picture presented by the depth map is a front face of a person. The depth map of the three-dimensional model is obtained from the side, and a picture presented by the depth map is a side face of the person. Each pixel value in the depth map represents a distance between the point in the scene and a camera. The depth maps in the front and side directions are used as an example below for description.

In operation 3012, feature extraction processing is performed on each depth map, to obtain a feature map of each depth map.

For example, feature extraction processing is separately performed on a front depth map and a side depth map, to obtain a feature map of each depth map. The feature extraction processing may be implemented by using a convolutional neural network, such as a residual network (ResNet).

In operation 3013, the feature maps are combined, to obtain a concatenated feature.

For example, each feature map may be represented as a matrix of an eigenvector combination. Each matrix is concatenated into a matrix having a larger size, to obtain the concatenated feature.

In operation 3014, the concatenated feature is activated, to obtain current coordinates of each key point in the first sample three-dimensional model.

For example, the activation processing may be implemented by using a multilayer perceptron. The multilayer perceptron activates the concatenated feature, and outputs the three-dimensional coordinates of the a plurality of key points in a form of a column vector through regression.

In some embodiments, refer to FIG. 2B. FIG. 2B is a schematic structural diagram of a key point detection model according to an embodiment of the present disclosure. The key point detection model 201B includes: at least one residual network 202B, a feature concatenation layer 203B, and a multilayer perceptron 204B, where each residual network 202B is configured for performing feature extraction processing on a depth map, the feature concatenation layer 203B is configured for performing the combination processing, and the multilayer perceptron 204B is configured for performing the activation processing.

For example, it is assumed that there are a plurality of depth maps, the quantity of residual networks may be the same as that of the depth maps. Each residual network concurrently performs feature extraction processing on the depth maps, thereby improving feature extraction processing efficiency. There may be only one residual network, which separately performs feature extraction processing on each depth map. The feature concatenation layer concatenates feature maps of each depth map. The multilayer perceptron activates the concatenated feature, and outputs the three-dimensional coordinates of the key points in a form of a column vector.

In operation 3015, a respective patch in which each key point is located and barycentric coordinates corresponding to each key point is determined based on the current coordinates of each key point.

For example, a spatial range corresponding to each patch in the three-dimensional model is obtained. When current coordinates of the key points fall within the spatial range corresponding to the patch, it is determined that the key points belong to the corresponding patch, and barycentric coordinates of the patch are obtained as barycentric coordinates of a key point pair.

In this embodiment of the present disclosure, labeled key point information is stored in a form of barycentric coordinates. Compared with directly storing three-dimensional coordinates of key points, in this embodiment of the present disclosure, a patch index of a patch in which the key points are located and barycentric coordinates of the patch are stored, so that the impact of rotation and shift of a three-dimensional model can be avoided, and three-dimensional space coordinates of the key points of the current model can always be exactly known through calculation by using the barycentric coordinates.

Still referring to FIG. 3A, in operation 302, three-dimensional space coordinates of each key point are determined based on the patch index and the barycentric coordinates of each key point.

For example, in a case that the patch index is obtained, vertex coordinates corresponding to the patch may be invoked from data of the three-dimensional model based on the patch index, and three-dimensional space coordinates are deduced based on the vertex coordinates and the barycentric coordinates.

In some embodiments, operation 302 is implemented in the following modes: performing the following processing for each key point: searching for, based on the patch index, vertex coordinates of each vertex of a patch in which the key point is located; determining a correspondence between each barycentric coordinate value in the barycentric coordinates and each vertex; and performing weighted summation processing on each vertex coordinate and the corresponding barycentric coordinate value, to obtain the three-dimensional space coordinates of the key point.

For example, the formula of the barycentric coordinates in a three-dimensional space may be represented as: (x, y, z)=αA+βB+γC, and α+β+γ=1, where (α, β, γ) is referred to as barycentric coordinates of a key point (x, y, z). A point A, a point B, and a point C are separately vertex coordinates of each vertex of a patch in which the key points are located.

In operation 303, the three-dimensional space coordinates of each key point in the first sample three-dimensional model are displaced, to obtain a plurality of second sample three-dimensional models.

For example, the displacement processing refers to adjusting three-dimensional space coordinates of a key point within a preset movement range, to deform the first sample three-dimensional model, to obtain a second sample three-dimensional model. A network topology of the first sample three-dimensional model keeps unchanged in the displacement processing process. To be specific, a connection relationship between key points in the first sample three-dimensional model and the second sample three-dimensional model is the same.

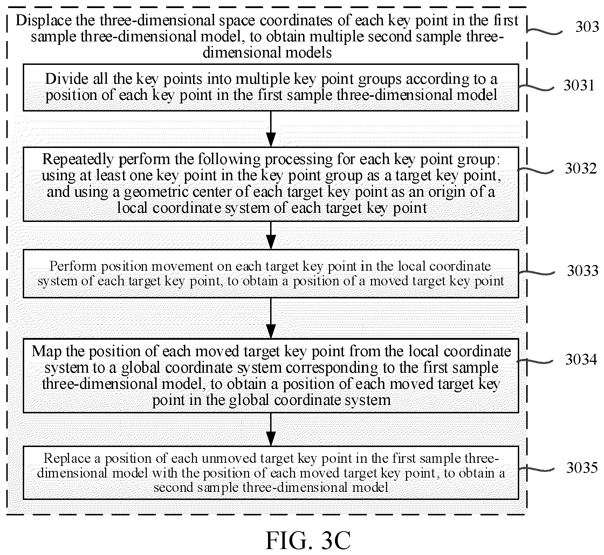

In some embodiments, refer to FIG. 3C. FIG. 3C is a third schematic flowchart of a three-dimensional model processing method according to an embodiment of the present disclosure. Operation 303 in FIG. 3A may be implemented through operations 3031 to 3035 in FIG. 3C, which are described below in detail.

In operation 3031, all the key points are divided into a plurality of key point groups according to a position of each key point in the first sample three-dimensional model.

For example, the key point group is divided according to positions of the key points. To be specific, the three-dimensional model is divided into a plurality of areas, and key points in each area are used as a key point group.

For example, a three-dimensional face model of a person is used as an example for description. Key points in the three-dimensional face model may be divided into corresponding groups according to areas of facial organs. The key point groups are divided according to facial organs, and different key point groups belong to different facial organs. For example, the ears, the nose, the mouth, the eyes, and the facial contour separately correspond to one key point group.

In operation 3032, the following processing is repeatedly performed for each key point group: using at least one key point in the key point group as a target key point, and using a geometric center of each target key point as an origin of a local coordinate system of each target key point.

For example, at least one key point is selected from the key point group. For example, any key point group is used as an example for description. The ear key point group includes 10 key points, and four of the key points are randomly selected as target key points. A local coordinate system of each target key point is set by using a geometric center of each target key point as an origin.

In operation 3033, position movement is performed on each target key point in the local coordinate system of each target key point, to obtain a position of a moved target key point.

For example, the position of the target key point is represented in the local coordinate system by using three-dimensional space coordinates. The position movement of the key point may be implemented by adjusting coordinate values of the three-dimensional space coordinates of the key point.

In some embodiments, operation 3033 may be implemented in the following modes: obtaining a displacement range of the key point group in the local coordinate system; and performing the following processing for each target key point: generating random displacement parameters based on the displacement range, and adding at least one coordinate value in the three-dimensional space coordinates of the target key point and the random displacement parameters, to obtain the three-dimensional space coordinates of the moved target key point in the local coordinate system.

For example, at least one coordinate value of the target key point is selected for movement. Assuming that a movement range is (-1, 1), a random displacement parameter N is generated within this range, where N is less than 1 and greater than -1. Coordinates (X1, Y1, Z1) in a local coordinate system of a key point A are perturbed, any one coordinate value is selected and added to a random displacement parameter N, to obtain coordinates (X1+N, Y1, Z1) of a moved target key point in the local coordinate system, and the coordinates (X1+N, Y1, Z1) are mapped back to a global coordinate system, to obtain a position of the displaced target key point.

In operation 3034, the position of each moved target key point is mapped from the local coordinate system to a global coordinate system corresponding to the first sample three-dimensional model, to obtain a position of each moved target key point in the global coordinate system.

For example, coordinate value differences between the local coordinate system and the origin of the global coordinate system are obtained, and three-dimensional space coordinates of a position of each moved target key point in the local coordinate system and the coordinate value differences are added, to obtain a position of each moved target key point in the global coordinate system.

In operation 3035, a position of each unmoved target key point in the first sample three-dimensional model is replaced with the position of each moved target key point, to obtain a second sample three-dimensional model.

For example, an unmoved key point in the first sample three-dimensional model is maintained, and an unmoved target key point is replaced with a moved target key point, to obtain a second sample three-dimensional model. A connection relationship between key points in the second sample three-dimensional model is the same as that of the first sample three-dimensional model.

In this embodiment of the present disclosure, a position of a key point is moved based on a three-dimensional model, to obtain a plurality of different sample three-dimensional models. Because the key point information is known, a newly obtained sample three-dimensional model does not need to be labeled with a key point, thereby saving computing resources required for obtaining sample data.

Still referring to FIG. 3A, in operation 304, the a plurality of second sample three-dimensional models and the first sample three-dimensional model are combined into a sample model set.

For example, the a plurality of second sample three-dimensional models, the first sample three-dimensional model, and the key point information of each three-dimensional model are stored in the sample model set.

In this embodiment of the present disclosure, because a plurality of second sample three-dimensional models are generated based on a first sample three-dimensional model, and key point information of each second sample three-dimensional model is known, the key point information does not need to be re-labeled, thereby improving efficiency of obtaining a sample three-dimensional model. Compared with a manual labeling mode in the related art, computing resources required for obtaining a sample are saved, thereby improving training efficiency and a training effect of a key point detection model.

In operation 305, an initialized key point detection model is trained based on the sample model set, to obtain a trained key point detection model.

For example, the trained key point detection model is configured for performing key point detection on a first to-be-registered three-dimensional model, and a key point detection result of the first to-be-registered three-dimensional model is configured for performing non-rigid deformation registration. A mode of training the key point detection model may be supervised learning.

In some embodiments, operation 305 is implemented in the following modes: invoking the initialized key point detection model based on the sample model set to perform key point detection, to obtain predicted three-dimensional space coordinates of predicted key points of each second sample three-dimensional model and the first sample three-dimensional model; determining a difference between each predicted three-dimensional space coordinate and the three-dimensional space coordinates of each key point; and determining a training loss of the initialized key point detection model based on the difference, and updating a parameter of the initialized key point detection model based on the training loss, to obtain the trained key point detection model.

For example, the training loss may be a mean squared error (MSE) loss function or a cross-entropy loss. The mean squared error loss function is an average value of a square sum of point errors corresponding to predicted data and original data (position information of the labeled key point). The cross-entropy loss is configured for measuring a difference between a model prediction result and a true label (position information of the labeled key point).

In this embodiment of the present disclosure, a key point is labeled by using barycentric coordinates, thereby improving accuracy of obtaining the key point. A plurality of different sample three-dimensional models are obtained by performing movement based on a recognized key point message, thereby improving richness of training samples, and improving accuracy of training a key point detection model.

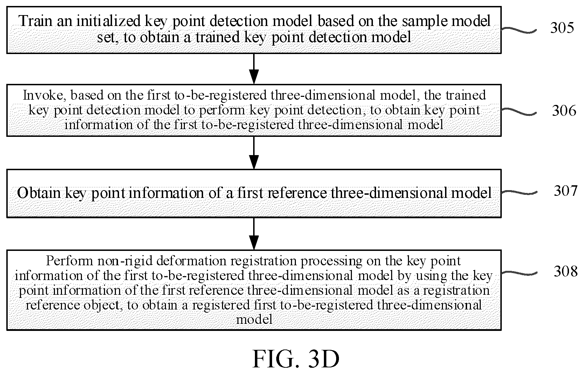

In some embodiments, refer to FIG. 3D. FIG. 3D is a fourth schematic flowchart of a three-dimensional model processing method according to an embodiment of the present disclosure. After operation 305 in FIG. 3A, operations 306 to 308 in FIG. 3D are performed, which are described below in detail.

In operation 306, based on the first to-be-registered three-dimensional model, the trained key point detection model is invoked to perform key point detection, to obtain key point information of the first to-be-registered three-dimensional model.

For example, the key point information includes: a patch index of a respective patch in which each key point is located, and barycentric coordinates of the patch. The principle of operation 306 is the same as that of operation 301, which is not described herein again.

In operation 307, key point information of a first reference three-dimensional model is obtained.

For example, the key point information of the first reference three-dimensional model may be pre-stored, or obtained by invoking the trained key point detection model.

In operation 308, non-rigid deformation registration is performed on the key point information of the first to-be-registered three-dimensional model by using the key point information of the first reference three-dimensional model as a registration reference object, to obtain a registered first to-be-registered three-dimensional model.

Non-rigid deformation of a three-dimensional model may be implemented by deformation transfer, and an objective of the deformation transfer is to transfer a shape change represented by deformation of a source to a target. The source deformation is represented as a set of affine transformation of each triangle of the source. This representation is used because a non-shifted part of each affine transformation codes a change of a direction, a scale, and a slant caused by a triangle deformation. The affine transformation includes: linear transformation (rotation, zooming, or chamfering), and shift transformation. The rotation, zooming, chamfering, and shift in a three-dimensional space each have three degrees of freedom, a total of 12 degrees of freedom. Therefore, 12 equations need to be provided for four pairs of points to be solved. A fourth vertex is constructed for three vertexes of a triangular patch in the three-dimensional model. The fourth vertex is located in a direction perpendicular to the triangular patch. The triangular patch in which each key point in a to-be-registered three-dimensional mesh model is located is deformed, and satisfies the following constraint in a deformation process. A patch corresponding to key points in a reference model matches the patch of the deformed to-be-registered three-dimensional mesh model, and the topology of the to-be-registered three-dimensional mesh model remains unchanged.

In this embodiment of the present disclosure, model registration processing is performed based on a trained key point detection model, to automatically perform key point detection, thereby improving efficiency and accuracy of model registration.

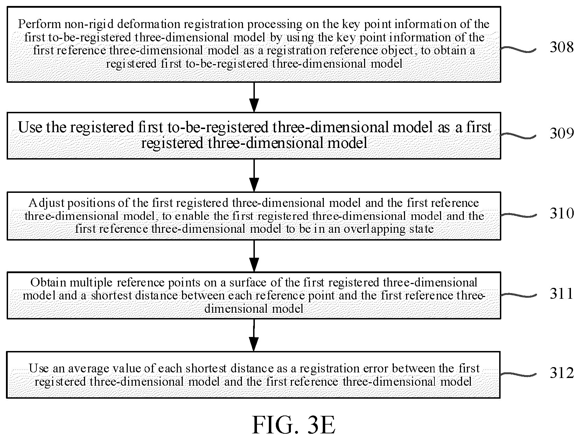

In some embodiments, refer to FIG. 3E. FIG. 3E is a fifth schematic flowchart of a three-dimensional model processing method according to an embodiment of the present disclosure. After operation 308, operations 309 to 312 in FIG. 3E are performed, which are described below in detail.

In operation 309, the registered first to-be-registered three-dimensional model is used as a first registered three-dimensional model.

For example, for ease of distinguishing the to-be-registered three-dimensional models before and after registration, the registered model is referred to as a registered three-dimensional model.

In operation 310, positions of the first registered three-dimensional model and the first reference three-dimensional model are adjusted, to enable the first registered three-dimensional model and the first reference three-dimensional model to be in an overlapping state.

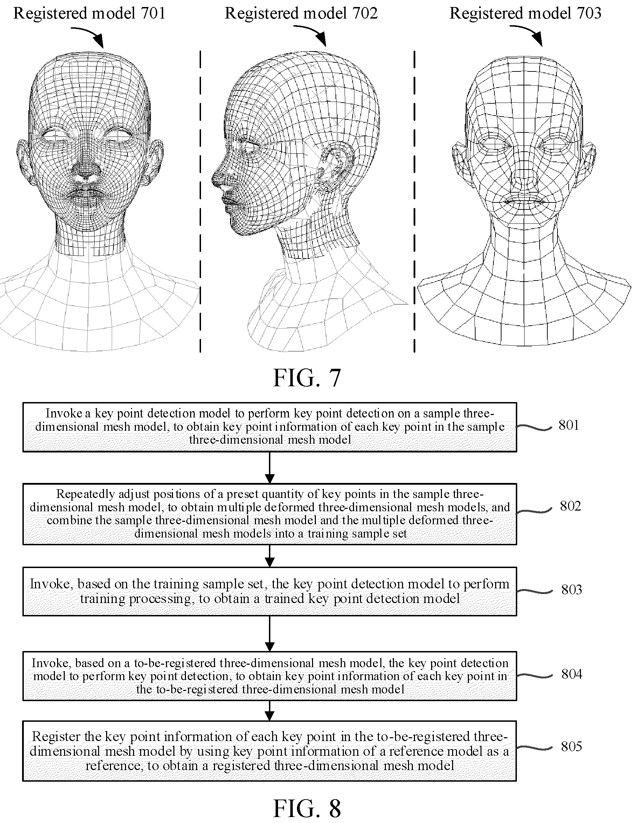

For example, positions of the first registered three-dimensional model and the first reference three-dimensional model are moved, to realize overlapping in barycenter thereof, thereby forming a state in which the two models overlap. Refer to FIG. 7. FIG. 7 is a schematic diagram of a registered three-dimensional model according to an embodiment of the present disclosure. A registered model 701 and a registered model 702 are a front view and a side view that are formed by overlapping a registered model 703 with a reference model.

In operation 311, a plurality of reference points on a surface of the first registered three-dimensional model and a shortest distance between each reference point and the first reference three-dimensional model are obtained.

For example, the a plurality of reference points on the surface of the first registered three-dimensional model may be points other than the key points. Based on a ray formed by a normal vector transmitted by a reference point, an intersection point between the ray and the first reference three-dimensional model is determined. A distance between the intersection point and the reference point is a shortest distance. The normal vector of the reference point is a vector that passes through the reference point and is perpendicular to a plane in which the reference point is located in the three-dimensional model.

In some embodiments, operation 311 is implemented in the following modes: using a plurality of vertexes on the surface of the first registered three-dimensional model as reference points, and performing the following processing for each reference point: transmitting rays based on a positive direction and a negative direction of a normal vector of the reference point, determining an intersection point of the ray and a surface of the first reference three-dimensional model, and using a distance between the intersection point and the reference point as the shortest distance between the reference point and the first reference three-dimensional model.

In operation 312, an average value of each shortest distance is used as a registration error between the first registered three-dimensional model and the first reference three-dimensional model.

For example, the registration error is negatively correlated to a registration effect of the non-rigid deformation registration. It is assumed that 40 reference points are selected from the surface of the first registered three-dimensional model, and an average value of shortest distances corresponding to the reference points is obtained as the registration error. A smaller registration error indicates a shorter distance between the 40 reference points and the reference model, and a better registration effect.

In some embodiments, in the presence of a plurality of first to-be-registered three-dimensional models, after operation 312, a registration error of non-rigid deformation registration performed for the a plurality of first to-be-registered three-dimensional models is obtained. The first to-be-registered three-dimensional models are sorted in a descending order based on the registration error of each first to-be-registered three-dimensional model, to obtain a descending sorting list. Corresponding key point information is obtained for a preset quantity of first to-be-registered three-dimensional models starting from the head in the descending sorting list. The preset quantity of first to-be-registered three-dimensional models and the corresponding key point information are combined into a sample model set. The trained key point detection model is iteratively trained based on the sample model set, to obtain an adjusted key point detection model.

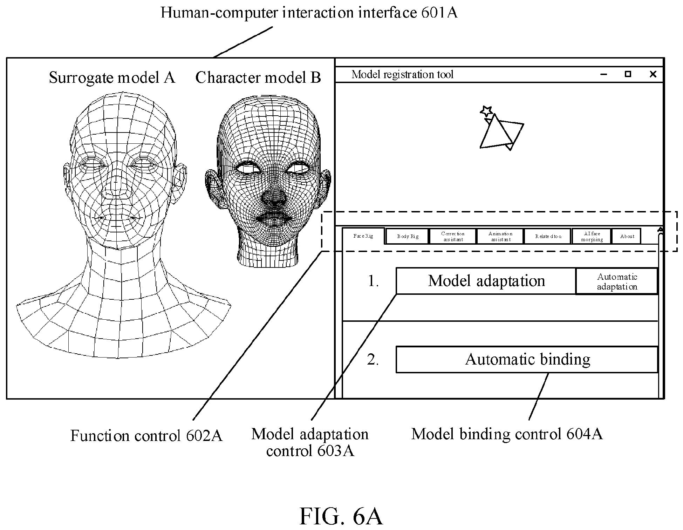

For example, the three-dimensional model processing method provided in this embodiment of the present disclosure may be implemented as an application, a plug-in (a key point labeling tool) in an application, a mini program, or the like installed in the terminal device 400 in FIG. 1. Refer to FIG. 6A. FIG. 6A is a schematic diagram of a human-computer interaction interface according to an embodiment of the present disclosure. A human-computer interaction interface 601A in FIG. 6A is an interface of a model registration tool, including various function controls 602A, a model adaptation control 603A, and a model binding control 604A that are configured for registering different parts of a three-dimensional model. A character model B is a personalized character model set by a user. A surrogate model A is a preset model provided by the model registration tool, and a key point of the surrogate model A has a mapping relationship with a preset skeleton animation. In response to a page in a face rig option and the model adaptation control 603A is triggered, the surrogate model A is registered with the character model B, and the character model B is used as a registration reference object, to obtain a registered surrogate model A. A shape of the registered surrogate model A is the same as that of the character model B. After model registration is performed, the registered surrogate model A is bound with the preset skeleton animation in response to a trigger operation for the model binding control 604A, to generate a corresponding three-dimensional animation. A virtual character in the formed three-dimensional animation has an appearance of the character model B, so that a three-dimensional animation of different virtual characters is produced by registration processing of the three-dimensional models.

For example, after a user uploads different to-be-registered three-dimensional models by using the human-computer interaction interface 601A of the application and performs registration processing, the server 200 collects registration results of the to-be-registered three-dimensional models, evaluates a registration error of each registration result, and selects key point information of a preset quantity (for example, 1000) of to-be-registered three-dimensional models with the maximum registration error, to construct a new training sample set. The trained key point detection model is trained, and a parameter of the trained key point detection model is adjusted to obtain an adjusted key point detection model. The foregoing training mode may be implemented as online iterative processing, so that the key point detection model provided in this embodiment of the present disclosure may be updated in real time in an application process, thereby improving accuracy of key point detection, and further improving accuracy of model registration.

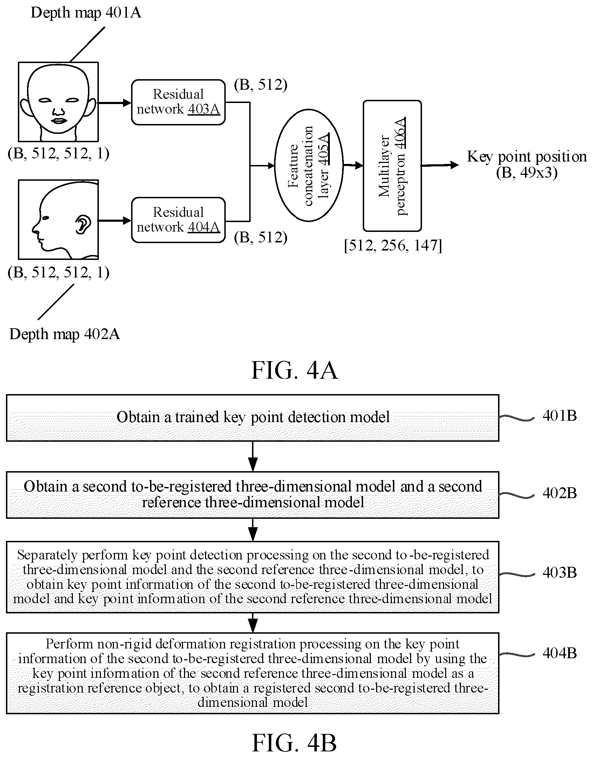

In some embodiments, refer to FIG. 4B. FIG. 4B is a sixth schematic flowchart of a three-dimensional model processing method according to an embodiment of the present disclosure. The present disclosure further provides a three-dimensional model processing method. Descriptions are provided with reference to operations in FIG. 4B.

In operation 401B, a trained key point detection model is obtained.

For example, the trained key point detection model is obtained by training using the three-dimensional model processing method according to this embodiment of the present disclosure.

In operation 402B, a second to-be-registered three-dimensional model and a second reference three-dimensional model are obtained.

For example, the second to-be-registered three-dimensional model and the second reference three-dimensional model are merely to be distinguished from the first to-be-registered three-dimensional model and the first reference three-dimensional model above. Using the server as an execution body, the second to-be-registered three-dimensional model and the second reference three-dimensional model may be uploaded by a user to the server 200 by using the terminal device 400 in FIG. 1. Alternatively, the second reference model is uploaded by the user, and the second to-be-registered three-dimensional model is a three-dimensional model in a three-dimensional skeleton animation. The second to-be-registered three-dimensional model is registered with the second reference three-dimensional model, so that an image of the three-dimensional model in the skeleton animation is converted into an image corresponding to the second reference model.

In operation 403B, key point detection is separately performed on the second to-be-registered three-dimensional model and the second reference three-dimensional model, to obtain key point information of the second to-be-registered three-dimensional model and key point information of the second reference three-dimensional model.

For example, the key point information includes: a patch index of a respective patch in which each key point is located, and barycentric coordinates of the patch. The principle of operation 403B is the same as that of the foregoing operation 306, which is not described herein again.

In operation 404B, non-rigid deformation registration is performed on the key point information of the second to-be-registered three-dimensional model by using the key point information of the second reference three-dimensional model as a registration reference object, to obtain a registered second to-be-registered three-dimensional model.

For example, the principle of operation 404B is the same as that of the foregoing operation 308, which is not described herein again.

In this embodiment of the present disclosure, key point detection is performed on a sample three-dimensional model by using a key point detection model, to obtain key point information corresponding to the sample three-dimensional model, and a position of the key point is moved, to generate a large quantity of new sample three-dimensional models, thereby improving key point labeling efficiency, enriching training data sets, saving computing resources required for obtaining labeled data, and improving accuracy of training the key point detection model. Key point information of a to-be-registered model is obtained based on a trained key point detection model, so that accuracy of three-dimensional model registration based on the key point information can be improved, thereby improving model registration efficiency.

The following describes an exemplary application of the three-dimensional model processing method in this embodiment of the present disclosure in an actual application scene.

The non-rigid deformation registration refers to deforming a three-dimensional mesh model into a form of another three-dimensional mesh model and keeping an original topological structure of the three-dimensional mesh model before registration. The rigid deformation registration performs only overall rotation and shift transformation, and does not change a local form of a model. However, the non-rigid deformation registration requires local form conforming. Pre-working of bone binding and transfer between characters is subjected to model registration (a bone can be copied and transferred only when a character bone model is registered). Using a three-dimensional head model of a person (a three-dimensional head model for short below) as an example, current commercial software lacks an automated non-rigid deformation registration solution, usually requires excessive manual participation, and has low efficiency. In the related art, a non-rigid registration function of a three-dimensional head model is provided. However, before use, a user needs to label a large quantity of key point pairs on an interface. This undoubtedly increases operation difficulty of the user. In addition, it is difficult to ensure accuracy of labeling by the user. Therefore, a model registration effect is also affected. The non-rigid deformation registration solution in the industry does not support automation of a procedure, relies on manual participation, and has low efficiency, and the stability of a deformation registration result is not good. For an automatic key point detection technology of the three-dimensional head model, a key point positioning method based on geometrical analysis greatly relies on manually set rules. For example, when a sharp edge of a model is detected, a threshold needs to be specified. The threshold is an empirical value, and is difficult to apply to head models of different configurations. Therefore, robustness and universality of the related art are relatively poor.

In the related art, data sets required for supervised learning of automatic key point detection of the three-dimensional head model are lacked, and it is difficult to obtain the supervised data. There are two reasons, which are described below in detail.

First, data of the three-dimensional head model is far less than that of a two-dimensional picture, and massive two-dimensional face images may be obtained and sorted out from the Internet. However, the three-dimensional head model is a work that is produced by three-dimensional modeling engineers, and the production process thereof is far more difficult than a camera shooting a two-dimensional picture. It is relatively difficult to obtain three-dimensional data. Second, face key point detection in a two-dimensional image is very mature, and many public face image data sets labeled with key points are available. The three-dimensional key point labeled data of the three-dimensional head model is basically in a blank state.

An embodiment of the present disclosure provides a three-dimensional model processing method. An automatic key point detection module for a three-dimensional head model is disposed, thereby resolving a problem of procedure automation and improving character registration efficiency. This is implemented by using a supervised learning solution based on a deep neural network, thereby avoiding a problem of poor stability of a conventional geometrical analysis algorithm.

Refer to FIG. 8. FIG. 8 is a schematic flowchart of a three-dimensional model processing method according to an embodiment of the present disclosure. The method is explained with operations shown in FIG. 8 by using a server as an execution body.

In operation 801, a key point detection model is invoked to perform key point detection on a sample three-dimensional mesh model, to obtain key point information of each key point in the sample three-dimensional mesh model.

For example, the key point detection model may be a deep neural network, and may perform regression prediction on three-dimensional coordinates of key points based on front and side depth maps of a three-dimensional head model. Scale normalization processing is performed on the three-dimensional head model, and the front and side depth maps of the normalized three-dimensional head model is rendered (each pixel value of an image represents a distance between a point in a scene and a camera). The depth maps in two directions are used as inputs of the key point detection model.

Refer to FIG. 4A. FIG. 4A is a schematic structural diagram of a key point detection model according to an embodiment of the present disclosure. The key point detection model includes a residual network 403A and a residual network 404A, which have a same structure, a feature concatenation layer 405A, and a multilayer perceptron 406A. A depth map 401A is inputted to the residual network 403A, and a depth map 402A is inputted to the residual network 404A. The residual network 403A is configured for performing feature extraction processing on the depth maps. A dimension of each depth map is (B, 512, 512, 1). A dimension of a feature map obtained by performing feature extraction on each residual network is (B, 512). The feature concatenation layer 405A combines two feature maps of (B, 512), and inputs a combined feature map to the multilayer perceptron 406A. Dimensions of three hidden layers of the multilayer perceptron 406A are (512, 265, 147). Three-dimensional coordinates (B, 49×3) of 49 key points are outputted through regression in a form of a column vector.

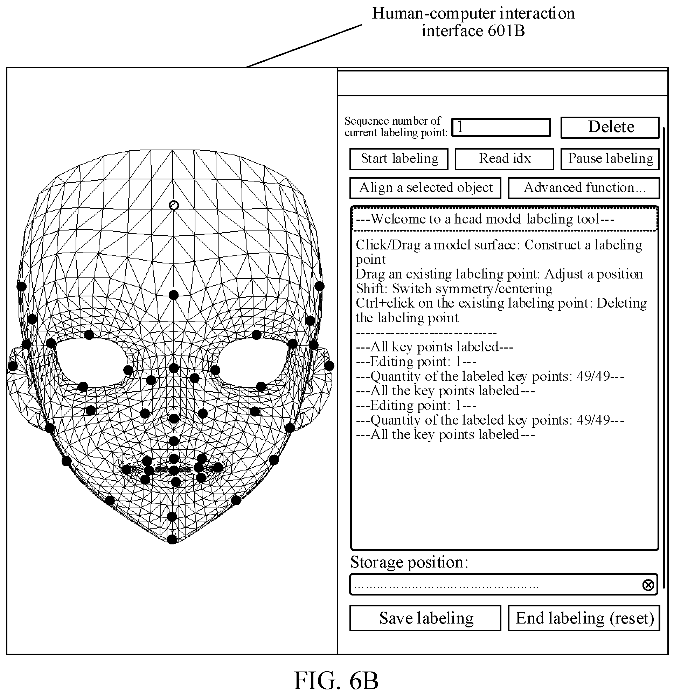

For example, the key point detection model provided in this embodiment of the present disclosure may be applied to three-dimensional key point detection software. Refer to FIG. 6A and FIG. 6B. FIG. 6A to FIG. 6B are schematic diagrams of a first human-computer interaction interface and a second human-computer interaction interface according to an embodiment of the present disclosure. A human-computer interaction interface 601A in FIG. 6A is an interface of a model registration tool, including various function controls 602A, a model adaptation control 603A, and a model binding control 604A that are configured for registering different parts of a three-dimensional model. In response to a page in a face rig option and the model adaptation control 603A is triggered, the surrogate model A is registered with the character model B, and the character model B is used as a registration reference object, to obtain a registered surrogate model A. After model registration is performed, the registered surrogate model A is bound with the preset skeleton animation in response to a trigger operation for the model binding control 604A, to generate a corresponding three-dimensional animation.

A human-computer interaction interface 601B in FIG. 6B is a schematic diagram of a key point detection interface. A key point detection model in this embodiment of the present disclosure is invoked to perform key point detection on the right three-dimensional head model, to obtain positions separately corresponding to 49 key points. This embodiment of the present disclosure is described by using an example in which there are 49 key points. In an actual application, the quantity of key points may be adjusted according to an application scene.

In some embodiments, storing labeled key point information in a form of barycentric coordinates has various advantages. Compared with directly storing three-dimensional coordinates of key points, in this embodiment of the present disclosure, a patch index of a patch in which the key points are located and barycentric coordinates of the patch are stored, so that the impact of rotation and shift of a head model can be avoided, and three-dimensional space coordinates of the key points of the current model can always be exactly known through calculation by using the barycentric coordinates. If the three-dimensional coordinates of the key points are directly stored, after the head model is rotated and shifted, three-dimensional space coordinates of points on the head model correspondingly change, increasing a calculation amount. Compared with a mode in which a key point is limited to a model vertex and only a vertex index is recorded, the method in this embodiment of the present disclosure breaks a constraint on a position at which the key point is labeled, and key points with related semantics can be accurately labeled. This advantage is more prominent on a three-dimensional head model with sparse vertexes.

The following explains and describes the principle of the barycentric coordinates. It is assumed that three vertexes of a triangle are a point A, a point B, and a point C. Any point of a plane of the triangle may be represented by a linear combination of three coordinates of the triangle. To be specific, the key points in the triangular patch may be expressed by using coordinates of three vertexes and non-negative coefficients α, β, and y.

The formula of the barycentric coordinates may be represented as: (x, y)=αA+βB+γC, and α+β+γ=1, where (α, β, γ) is referred to as barycentric coordinates of a point (x, y).

A storage format of a key point labeling result is represented in the following table (1):

**Table (1)**

| Key point sequence number | Model name | Patch index | α | β |
|---|---|---|---|---|
| 1 | Game_head1 | 1132 | 0.05464 | 0.89538 |
| 2 | Game_head1 | 1052 | 0.97857 | 0.01927 |
| 3 | Game_head1 | 366 | 0.01754 | 0.03609 |
| 4 | Game_head1 | 596 | 0.00356 | 0.01641 |

Each row in the table represents a position of a key point in a three-dimensional model Game_head1, and a patch index represents a label of a triangular patch to which the key point belongs. γ=1-(α+β).

In operation 802, positions of a preset quantity of key points in the sample three-dimensional mesh model are repeatedly adjusted, to obtain a plurality of deformed three-dimensional mesh models, and the sample three-dimensional mesh model and the a plurality of deformed three-dimensional mesh models are combined into a training sample set.

For example, after key point information in the sample three-dimensional mesh model is obtained, sample enhancement processing may be performed based on the sample three-dimensional mesh model, to obtain a large quantity of training samples. The stored barycentric coordinates of the key points of the sample three-dimensional mesh model are converted into three-dimensional coordinates, and positions (three-dimensional coordinates) of the 49 key points are randomly adjusted. For example, relative distances between key points of upper and lower eyelids of the eyes of the three-dimensional head model are adjusted. In this way, a large quantity of deformed key point data is generated.

For example, in this embodiment of the present disclosure, a Laplacian surface editor (Laplacian Surface Editing) is used, and deformed key points are used as a target for traction, so that an original three-dimensional head model is deformed correspondingly, and a plurality of key points and corresponding three-dimensional model data can be deformed from an original three-dimensional model labeled with the key points. The following explains and describes implementation of deformation processing.

It is assumed that in local coordinate axes corresponding to key points, an x-axis faces right, a y-axis faces upward, and a z-axis faces outward. The key points of the three-dimensional head model include: a total of 49 key points at eyes, a nose, a mouth, and whole.

For eye key points: Using the left eye as an example, key point sequence numbers of the eye key points include [6, 8, 10, 12]. A coordinate origin of a local coordinate system is moved to geometric centers of the four key points and the sizes are normalized. In the local coordinate system, global displacement of key points or individual displacement of some key points is performed. The coordinates of the displaced key points are mapped to an original coordinate system. The displacement operation in the local coordinate system includes at least one of the following:
1. Generate a random value shift_y in a range of [-0.1, 0.1], so that y coordinates of four key points of the left eye entirely generate the offset.
2. Generate an upper eyelid opening amplitude upper_scale within a range of [-0.2, 0.2]. For example, the y coordinate of a key point #10 is modified into kpts[10, 1]*=1+upper_scale. Similarly, a lower eyelid movement amplitude lower_scale is generated. For example, the y coordinate of a key point #12 is perturbed. The opening degree of the eyes is changed by the upper eyelid opening amplitude and the lower eyelid movement amplitude.
3. Separately perform, for x, y, and z coordinates of a plurality of (for example, four) key points of the eye, different scaling coefficients [x_scale, y_scale, z_scale], where these coefficients are also random numbers generated within a preset range. The key points of the right eye are subjected to an operation consistent with those of the left eye.

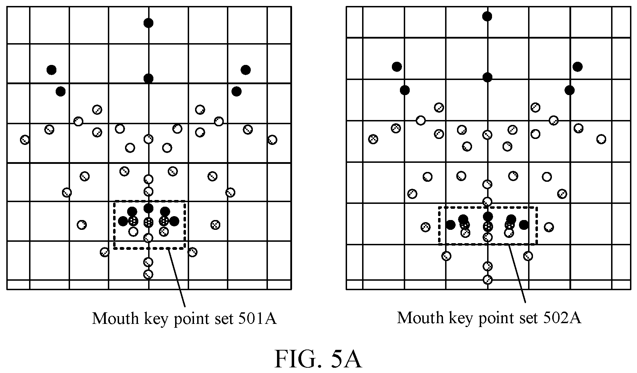

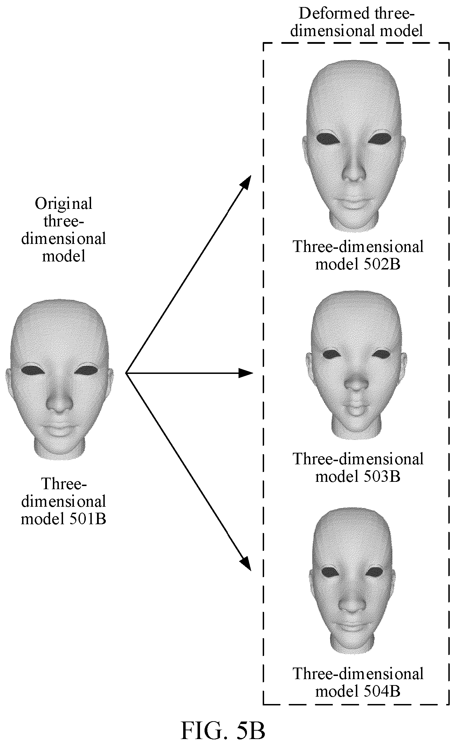

For example, similar to the adjustment mode of the eyes, adjustment of the three-dimensional coordinates of another part of the three-dimensional head model is not described herein again. For an original head model that has been labeled completely, by using the foregoing mode of perturbing the key points, a large quantity (for example, 1000) of perturbed key points are generated. 49 perturbed key points are used for driving the original head model to perform deformation (for example, the Laplacian method), and a large quantity (for example, 1000) of head models are obtained, thereby enriching training data sets. Refer to FIG. 5A. FIG. 5A is a schematic diagram of position transfer of key points according to an embodiment of the present disclosure. FIG. 5A is a plane view of key point positions. A mouth key point set 501A includes positions of a plurality of key points of a mouth in a three-dimensional head model before deformation, and a mouth key point set 502A is formed after deformation. Refer to FIG. 5B. FIG. 5B is a schematic diagram of a three-dimensional model after position transfer of key points according to an embodiment of the present disclosure. The position transfer of key points is performed based on an original three-dimensional model 501B, to obtain a plurality of deformed three-dimensional models, for example, a three-dimensional model 502B, a three-dimensional model 504B, and a three-dimensional model 503B. Network topologies of the three-dimensional model 502B, the three-dimensional model 504B, and the three-dimensional model 503B are the same as those of the three-dimensional model 501B, but the shapes are changed.

For example, a processing object for obtaining deformation of a sample three-dimensional model in the training sample set is a small quantity of sparse key points. An objective of the non-rigid deformation registration is to make two model surfaces conform to each other, namely, to make positions of the surfaces change. A deformation target thereof is a dense target head model. The key points in the non-rigid registration only play a role of positioning, but are not unique deformation targets.

In this embodiment of the present disclosure, a large quantity of three-dimensional models with different facial feature attitudes can be effectively generated by randomly deforming the key points to drive deformation of the original head model. The key points corresponding to these generated three-dimensional models are obtained by the foregoing random deformation. Therefore, key point labeling does not need to be performed on these generated three-dimensional models. A data set including a large quantity of head models and key points may be generated from a small quantity of original head model data. The foregoing supervised learning training is performed by using the data set, to obtain a neural network model that may predict key point coordinates from front and side depth maps.

In operation 803, based on the training sample set, the key point detection model is invoked to perform training processing, to obtain a trained key point detection model.

For example, supervised learning is performed on the key point detection model based on a three-dimensional model in the training sample set and corresponding key point labeled data, to obtain a trained model.

In operation 804, based on a to-be-registered three-dimensional mesh model, the key point detection model is invoked to perform key point detection, to obtain key point information of each key point in the to-be-registered three-dimensional mesh model.

For example, the key point detection is performed based on the key point detection model on which training is completed. A principle of the key point detection is the same as operation 801 above, and details are not described herein again.

In operation 805, the key point information of each key point in the to-be-registered three-dimensional mesh model is registered by using key point information of a reference model as a registration reference object, to obtain a registered three-dimensional mesh model.

For example, non-rigid deformation of a three-dimensional model may be implemented by deformation transfer, and an objective of the deformation transfer is to transfer a shape change represented by deformation of a source to a target. The source deformation is represented as a set of affine transformation of each triangle of the source. This representation is used because a non-shifted part of each affine transformation codes a change of a direction, a scale, and a slant caused by a triangle deformation. The affine transformation includes: linear transformation (rotation, zooming, or chamfering), and shift transformation. The rotation, zooming, chamfering, and shift in a three-dimensional space each have three degrees of freedom, a total of 12 degrees of freedom. Therefore, 12 equations need to be provided for four pairs of points to be solved. A fourth vertex is constructed for three vertexes of a triangular patch in the three-dimensional model. The fourth vertex is located in a direction perpendicular to the triangular patch. The triangular patch in which each key point in a to-be-registered three-dimensional mesh model is located is deformed, and satisfies the following constraint in a deformation process. A patch corresponding to key points in a reference model matches the patch of the deformed to-be-registered three-dimensional mesh model, and the topology of the to-be-registered three-dimensional mesh model remains unchanged.

Refer to FIG. 7. FIG. 7 is a schematic diagram of a registered three-dimensional model according to an embodiment of the present disclosure. A registered model 701 and a registered model 702 are a front view and a side view that are formed by superposing a registered model 703 with a reference model. It can be seen that an error between the registered model and the reference model is small, the models are relatively conforming, and a registration effect is good.

For example, an effect of deformation registration may be measured by using an average point-to-surface distance error indicator. The average point-to-surface distance error indicator is an average shortest distance between each vertex of the user model B and the surface of the surrogate model A. The following explains a calculation process of the average point-to-surface distance error indicator.

It is assumed that the reference model is a model B and the registered model is a model A. Rays are transmitted from a vertex of the model B to a positive direction and a negative direction of a normal vector, and intersected with a surface of the model A. Then, a distance between the vertex and the intersection point is calculated. The average point-to-surface distance error indicator is positively correlated to a deformation matching error. To be specific, a closer indicator to 0 indicates a lower deformation matching error and a higher matching degree.

In some embodiments, whether the key points are accurate determines a final effect of the non-rigid deformation. The accuracy of key point detection performed by the key point detection model may be improved in an online iteration mode. Referring to FIG. 1, request data transmitted by a user to the server 200 by using the terminal device 400 is parsed, and a three-dimensional head model in the request data, predicted key point coordinates of an online service, and deformed head model data obtained through final processing of the online service are stored. A large quantity of head model data uploaded by the user to a database is obtained, and head model deduplication and screening is performed on the head model data, to remove three-dimensional head models that are invoked repeatedly and belong to a same head model. A registration result corresponding to each piece of request data and an average point-to-surface distance error indicator (an adaptation error indicator for short below) between character head models are obtained. The data is sorted according to a descending order of adaptation error indicators, and the data with a relatively large error is preferentially reserved.

In an actual application, forms of an original trained head model and a head model used when the user actually invokes a service are greatly different. This causes different data set distributions. For example, a previous original head model is mostly a complete head model, including a neck. The head model actually transmitted by the user may only include a face model and does not include a rear structure and a neck structure. Diversity of user data causes a large error in key point prediction, so that a next non-rigid deformation causes an accumulated error. The accumulated error may be reduced by online iteration training.

For example, a plurality of (for example, 300) pieces of head model data having a maximum adaptation error indicator are selected, a key point labeling tool is invoked to label key points on the head model data, and three-dimensional head model deformation data is also enhanced based on a key point traction mode, to obtain a batch of new training data. The current key point prediction model is trained based on the new training data, to fine-tune the current key point prediction model, to obtain a three-dimensional head model key point prediction model further meeting a user requirement, thereby improving accuracy of non-rigid deformation registration of the three-dimensional model.

In this embodiment of the present disclosure, from the perspective of a user, the user cannot perceive an evolution iteration of the key point detection model, and the user obtains a surrogate model after deformation and wrapping by clicking an automatic adaptation button. The online iteration training mode provided in this embodiment of the present disclosure can gradually and iteratively optimize a final non-rigid deformation adaptation effect without affecting use of a user when an existing service is reserved. The mode is a reliable and effective functional optimization update mode proven in practice.

In this embodiment of the present disclosure, the key point detection model and the registration model for performing non-rigid deformation registration are trained in an online iteration mode. Compared with an existing software tool (such as R3DS or Wrap4d), a procedure is automated, and the registration efficiency can be improved, thereby accelerating binding and production of a character animation skeleton, and improving production efficiency of a game character. On the other hand, on-line data collection is used in combination with a mode of fine tuning a three-dimensional model, actual head model data uploaded by a user can be effectively conformed, thereby improving accuracy of key point detection, and ensuring accuracy of non-rigid deformation registration.

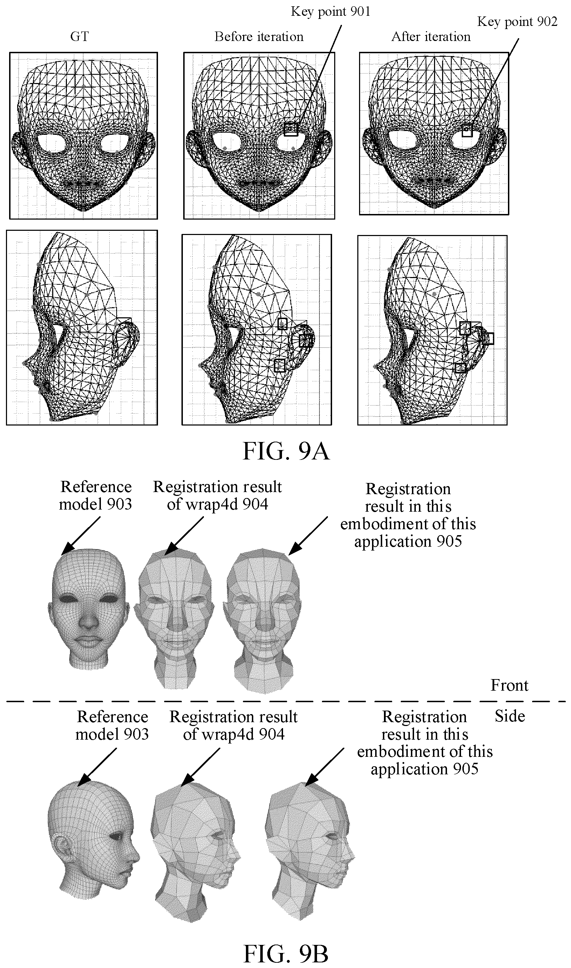

The following describes an effect achieved by this embodiment of the present disclosure with reference to the key point detection result and the registration result. Refer to FIG. 9A. FIG. 9A is a schematic diagram of a key point detection result according to an embodiment of the present disclosure. Before the three-dimensional model processing method provided in this embodiment of the present disclosure iterates a key point detection model, a key point 901 detected for a three-dimensional model is located near an orbit of the three-dimensional model. After the three-dimensional model processing method provided in this embodiment of the present disclosure iterates the key point detection model, accuracy of key point labeling is improved, and a key point 902 is labeled on the orbit of the three-dimensional model. Refer to FIG. 9B. FIG. 9B is a schematic diagram of a registration result according to an embodiment of the present disclosure. FIG. 9B shows front and side views of a reference model 903 and front and side views of two registration results performed based on the reference model 903. The registration result includes: a registration result 904 based on the related art wrap4d and a registration result 905 in this embodiment of the present disclosure. Compared with the wrap4d-based registration result 904, a shape of the registration result 905 in this embodiment of the present disclosure is closer to that of the reference model 903.

The following continues to describe an exemplary structure in which the three-dimensional model processing apparatus 455 provided in this embodiment of the present disclosure is implemented as a software module. In some embodiments, as shown in FIG. 2A, the software module in the three-dimensional model processing apparatus 455 stored in the memory 450 may include the following modules. A detection module 4551 is configured to perform key point detection on a first sample three-dimensional model, to obtain a patch index and barycentric coordinates of a respective patch in which each of a plurality of key points of the first sample three-dimensional model is located. The detection module 4551 is configured to determine three-dimensional space coordinates of each key point based on the patch index and the barycentric coordinates of each key point. A data enhancement module 4552 is configured to displace the three-dimensional space coordinates of each key point in the first sample three-dimensional model, to obtain a plurality of second sample three-dimensional models. The data enhancement module 4552 is configured to combine the a plurality of second sample three-dimensional models and the first sample three-dimensional model into a sample model set. A training module 4553 is configured to train an initialized key point detection model based on the sample model set, to obtain a trained key point detection model, where the trained key point detection model is configured for performing key point detection on a first to-be-registered three-dimensional model, and a key point detection result of the first to-be-registered three-dimensional model is configured for performing non-rigid deformation registration.

In some embodiments, the detection module 4551 is configured to: obtain at least one depth map of the first sample three-dimensional model, where each depth map is obtained from a different direction of the first sample three-dimensional model; perform feature extraction processing on each depth map, to obtain a feature map of each depth map; combine the feature maps, to obtain a concatenated feature; activate the concatenated feature, to obtain current coordinates of each key point in the first sample three-dimensional model; and determine, based on the current coordinates of each key point, a respective patch in which each key point is located and barycentric coordinates corresponding to each key point.

In some embodiments, the key point detection model includes: at least one residual network model, a feature concatenation layer, and a multilayer perceptron, where each residual network model is configured for performing feature extraction processing on a depth map, the feature concatenation layer is configured for performing the combination processing, and the multilayer perceptron is configured for performing the activation processing.

In some embodiments, the detection module 4551 is configured to perform the following processing for each key point: searching for, based on the patch index, vertex coordinates of each vertex of a patch in which the key point is located; determining a correspondence between each barycentric coordinate value in the barycentric coordinates and each vertex; and performing weighted summation processing on each vertex coordinate and the corresponding barycentric coordinate value, to obtain the three-dimensional space coordinates of the key point.

In some embodiments, after training an initialized key point detection model based on the sample model set to obtain a trained key point detection model, a registration module 4554 is configured to: invoke, based on the first to-be-registered three-dimensional model, the trained key point detection model to perform key point detection, to obtain key point information of the first to-be-registered three-dimensional model, where the key point information includes: a patch index of a respective patch in which each key point is located, and barycentric coordinates of the patch; obtain key point information of a first reference three-dimensional model; and perform non-rigid deformation registration on the key point information of the first to-be-registered three-dimensional model by using the key point information of the first reference three-dimensional model as a registration reference object, to obtain a registered first to-be-registered three-dimensional model.

In some embodiments, after performing non-rigid deformation registration on the key point information of the first to-be-registered three-dimensional model by using the key point information of the first reference three-dimensional model as a registration reference object, to obtain a registered first to-be-registered three-dimensional model, the training module 4553 is configured to: use the registered first to-be-registered three-dimensional model as a first registered three-dimensional model; adjust positions of the first registered three-dimensional model and the first reference three-dimensional model, to enable the first registered three-dimensional model and the first reference three-dimensional model to be in an overlapping state; obtain a plurality of reference points on a surface of the first registered three-dimensional model and a shortest distance between each reference point and the first reference three-dimensional model; and use an average value of each shortest distance as a registration error between the first registered three-dimensional model and the first reference three-dimensional model, where the registration error is negatively correlated to a registration effect of the non-rigid deformation registration.

In some embodiments, the training module 4553 is configured to: use a plurality of vertexes on the surface of the first registered three-dimensional model as reference points; and perform the following processing for each reference point: transmitting rays based on a positive direction and a negative direction of a normal vector of the reference point, determining an intersection point of the ray and a surface of the first reference three-dimensional model, and using a distance between the intersection point and the reference point as the shortest distance between the reference point and the first reference three-dimensional model.

In some embodiments, in the presence of a plurality of first to-be-registered three-dimensional models, after using an average value of each shortest distance as a registration error between the first registered three-dimensional model and the first reference three-dimensional model, the training module 4553 is configured to: obtain a registration error of non-rigid deformation registration performed for the a plurality of first to-be-registered three-dimensional models; sort the first to-be-registered three-dimensional models in a descending order based on the registration error of each first to-be-registered three-dimensional model, to obtain a descending sorting list; obtain corresponding key point information for a preset quantity of first to-be-registered three-dimensional models starting from the head in the descending sorting list; combine the preset quantity of first to-be-registered three-dimensional models and the corresponding key point information into a sample model set; and iteratively train the trained key point detection model based on the sample model set, to obtain an adjusted key point detection model.

In some embodiments, the data enhancement module 4552 is configured to: divide all the key points into a plurality of key point groups according to a position of each key point in the first sample three-dimensional model; and repeatedly perform the following processing for each key point group: using at least one key point in the key point group as a target key point, and using a geometric center of each target key point as an origin of a local coordinate system of each target key point; performing position movement on each target key point in the local coordinate system of each target key point, to obtain a position of a moved target key point; mapping the position of each moved target key point from the local coordinate system to a global coordinate system corresponding to the first sample three-dimensional model, to obtain a position of each moved target key point in the global coordinate system; and replacing a position of each unmoved target key point in the first sample three-dimensional model with the position of each moved target key point, to obtain a second sample three-dimensional model.

In some embodiments, the position of the target key point is represented in the local coordinate system by using three-dimensional space coordinates. The data enhancement module 4552 is configured to: obtain a displacement range of the key point group in the local coordinate system; and perform the following processing for each target key point: generating random displacement parameters based on the displacement range, and adding at least one coordinate value in the three-dimensional space coordinates of the target key point and the random displacement parameters, to obtain the three-dimensional space coordinates of the moved target key point in the local coordinate system.

In some embodiments, the training module 4553 is configured to: invoke the initialized key point detection model based on the sample model set to perform key point detection, to obtain predicted three-dimensional space coordinates of predicted key points of each second sample three-dimensional model and the first sample three-dimensional model; determine a difference between each predicted three-dimensional space coordinate and the three-dimensional space coordinates of each key point; and determine a training loss of the initialized key point detection model based on the difference, and update a parameter of the initialized key point detection model based on the training loss, to obtain the trained key point detection model.

An embodiment of the present disclosure further provides a three-dimensional model processing apparatus, including the following modules. A detection module 4551 is configured to obtain a trained key point detection model, where the trained key point detection model is obtained by training using the three-dimensional model processing method according to this embodiment of the present disclosure. The detection module 4551 is configured to obtain a second to-be-registered three-dimensional model and a second reference three-dimensional model. The detection module 4551 is configured to separately perform key point detection on the second to-be-registered three-dimensional model and the second reference three-dimensional model, to obtain key point information of the second to-be-registered three-dimensional model and key point information of the second reference three-dimensional model, where the key point information includes: a patch index of a respective patch in which each key point is located, and barycentric coordinates of the patch. A registration module 4554 is configured to perform non-rigid deformation registration on the key point information of the second to-be-registered three-dimensional model by using the key point information of the second reference three-dimensional model as a registration reference object, to obtain a registered second to-be-registered three-dimensional model.

An embodiment of the present disclosure provides a computer program product. The computer program product includes computer programs or computer-executable instructions. The computer programs or the computer-executable instructions are stored in a computer-readable storage medium. A processor of an electronic device reads the computer-executable instructions from the computer-readable storage medium. The processor executes the computer-executable instructions, to cause the electronic device to perform the three-dimensional model processing method according to this embodiment of the present disclosure.

An embodiment of the present disclosure provides a computer-readable storage medium storing computer-executable instructions. The computer-executable instructions or computer programs are stored therein. The computer-executable instructions or the computer programs, when executed by a processor, cause the processor to perform the three-dimensional model processing method provided in this embodiment of the present disclosure, for example, the three-dimensional model processing method shown in FIG. 3A.

In some embodiments, the computer-readable storage medium may be a memory such as a FRAM, a ROM, a PROM, an EPROM, an EEPROM, a flash memory, a magnetic surface memory, a compact disc, or a CD-ROM. Various devices including one or any combination of the foregoing memories are also possible.

In some embodiments, the computer-executable instructions may be written in the form of a program, software, a software module, a script, or code and according to a programming language (including a compiler or interpreter language or a declarative or procedural language) in any form, and may be deployed in any form, including an independent program or a module, a component, a subroutine, or another unit suitable for use in a computing environment.

In an example, the computer-executable instructions may, but do not necessarily, correspond to a file in a file system, and may be stored in a part of a file that saves another program or other data, for example, be stored in one or more scripts in a hyper text markup language (HTML) file, stored in a file that is specially used for a program in discussion, or stored in a plurality of collaborative files (for example, be stored in files of one or more modules, subprograms, or code parts).

As an example, the executable instructions may be deployed to be executed on a single electronic device, or on a plurality of electronic devices located in a single location, or on a plurality of electronic devices distributed in a plurality of locations and interconnected through a communication network.

**In** conclusion, according to this embodiment of the present disclosure, key point detection is performed on a sample three-dimensional model by using a key point detection model, to obtain key point information corresponding to the sample three-dimensional model, and a position of the key point is moved, to generate a large quantity of new sample three-dimensional models, thereby improving key point labeling efficiency, enriching training data sets, saving computing resources required for obtaining labeled data, and improving accuracy of training the key point detection model. Key point information of a to-be-registered model is obtained based on a trained key point detection model, so that accuracy of three-dimensional model registration based on the key point information can be improved, thereby improving model registration efficiency.

The foregoing descriptions are merely embodiments of the present disclosure and are not intended to limit the protection scope of the present disclosure. Any modification, equivalent replacement, or improvement made within the spirit and scope of the present disclosure fall within the protection scope of the present disclosure.

## Claims

1. A three-dimensional model processing method, performed by an electronic device, the method comprising:
performing key point detection on a first sample three-dimensional model, to obtain a patch index of a respective patch in which each of a plurality of key points of the first sample three-dimensional model is located and barycentric coordinates of the key point;
determining three-dimensional space coordinates of each of the plurality of key points using the patch index and the barycentric coordinates of the key point;
displacing the three-dimensional space coordinates of the plurality of key points in the first sample three-dimensional model, to obtain a plurality of second sample three-dimensional models;
combining the plurality of second sample three-dimensional models and the first sample three-dimensional model into a sample model set; and
training an initialized key point detection model using the sample model set, to obtain a trained key point detection model, wherein the trained key point detection model is configured for performing key point detection on a first to-be-registered three-dimensional model, and a key point detection result of the first to-be-registered three-dimensional model being configured for performing non-rigid deformation registration.

2. The method of claim 1, wherein performing the key point detection on the first sample three-dimensional model, to obtain the patch index of the respective patch in which each of the plurality of key points of the first sample three-dimensional model is located and the barycentric coordinates of the key point comprises:
obtaining at least one depth map of the first sample three-dimensional model, wherein each of the at least one depth map is obtained from a different direction of the first sample three-dimensional model;
performing feature extraction processing on each of the at least one depth map, to obtain a feature map of the depth map;
combining the feature maps, to obtain a concatenated feature;
activating the concatenated feature, to obtain current coordinates of each of the plurality of key points in the first sample three-dimensional model; and
determining, using the current coordinates of each of the plurality of key points, a patch in which the key point is located and barycentric coordinates of the key point.

3. The method of claim 2, wherein
the key point detection model comprises: at least one residual network model, a feature concatenation layer, and a multilayer perceptron, each of the at least one residual network model being configured for performing feature extraction processing on a depth map, the feature concatenation layer being configured for performing the combination processing, and the multilayer perceptron being configured for performing the activation processing.

4. The method of any one of claims 1 to 3, wherein determining three-dimensional space coordinates of each of the plurality of key points using the patch index and the barycentric coordinates of the key point comprises:
for each of the plurality of key points,
querying, using the patch index, vertex coordinates of each vertex of a patch in which the key point is located;
determining a correspondence between each barycentric coordinate value in the barycentric coordinates and each vertex; and
performing weighted summation on each vertex coordinate and the corresponding barycentric coordinate value, to obtain the three-dimensional space coordinates of the key point.

5. The method of any one of claims 1 to 4, wherein after training the initialized key point detection model using the sample model set, to obtain the trained key point detection model, the method further comprises:
performing key point detection on the first to-be-registered three-dimensional model using the trained key point detection model, to obtain key point information of the first to-be-registered three-dimensional model, wherein the key point information comprises a patch index of a respective patch in which each of the plurality of key points is located, and barycentric coordinates of the patch;
obtaining key point information of a first reference three-dimensional model; and
performing non-rigid deformation registration on the key point information of the first to-be-registered three-dimensional model by using the key point information of the first reference three-dimensional model as a registration reference object, to obtain a first registered three-dimensional model.

6. The method of claim 5, wherein after performing the non-rigid deformation registration on the key point information of the first to-be-registered three-dimensional model by using the key point information of the first reference three-dimensional model as the registration reference object, to obtain the first registered three-dimensional model, the method further comprises:
adjusting positions of the first registered three-dimensional model and the first reference three-dimensional model, to enable the first registered three-dimensional model and the first reference three-dimensional model to be in an overlapping state;
obtaining a plurality of reference points on a surface of the first registered three-dimensional model and a shortest distance between each of the plurality of reference points and the first reference three-dimensional model; and
using an average value of the shortest distances between the reference points and the first reference three-dimensional model as a registration error between the first registered three-dimensional model and the first reference three-dimensional model, wherein the registration error is negatively correlated to a registration effect of the non-rigid deformation registration.

7. The method of claim 6, wherein obtaining the plurality of reference points on the surface of the first registered three-dimensional model and the shortest distance between each of the plurality of reference points and the first reference three-dimensional model comprises:
using a plurality of vertexes on the surface of the first registered three-dimensional model as reference points; and
for each of the reference points: transmitting rays based on a positive direction and a negative direction of a normal vector of the reference point, determining an intersection point of the ray and a surface of the first reference three-dimensional model, and using a distance between the intersection point and the reference point as the shortest distance between the reference point and the first reference three-dimensional model.

8. The method of claim 6, wherein in the presence of a plurality of first to-be-registered three-dimensional models, after using the average value of the shortest distances as the registration error between the first registered three-dimensional model and the first reference three-dimensional model, the method further comprises:
obtaining a registration error of non-rigid deformation registration performed for the plurality of first to-be-registered three-dimensional models;
sorting the first to-be-registered three-dimensional models in a descending order using the registration error of each of the plurality of first to-be-registered three-dimensional models, to obtain a descending sorting list;
obtaining corresponding key point information for a preset quantity of first to-be-registered three-dimensional models starting from the head in the descending sorting list;
combining the preset quantity of first to-be-registered three-dimensional models and the corresponding key point information into a sample model set; and
iteratively training the trained key point detection model using the sample model set, to obtain an adjusted key point detection model.

9. The method of any one of claims 1 to 8, wherein displacing the three-dimensional space coordinates of each of the plurality of key points, to obtain the plurality of second sample three-dimensional models comprises:
dividing the plurality of key points into a plurality of key point groups according to a position of each of the plurality of key points in the first sample three-dimensional model; and
repeatedly performing the following processing for each of the plurality of key point groups:
using at least one key point in the key point group as a target key point, and using a geometric center of each target key point as an origin of a local coordinate system of the target key point;
performing position movement on each target key point in the local coordinate system of the target key point, to obtain a position of a moved target key point;
mapping the position of each moved target key point from the local coordinate system to a global coordinate system corresponding to the first sample three-dimensional model, to obtain a position of the moved target key point in the global coordinate system; and
replacing a position of each unmoved target key point in the first sample three-dimensional model with the position of each moved target key point, to obtain a second sample three-dimensional model.

10. The method of claim 9, wherein the position of the target key point in the local coordinate system is represented by using three-dimensional space coordinates; and
wherein performing position movement on each target key point in the local coordinate system of the target key point, to obtain the position of the moved target key point comprises:
obtaining a displacement range of the key point group in the local coordinate system; and
performing the following processing for each target key point: generating a random displacement parameter using the displacement range, and adding at least one coordinate value in the three-dimensional space coordinates of the target key point and the random displacement parameter, to obtain the three-dimensional space coordinates of the moved target key point in the local coordinate system.

11. The method of any one of claims 1 to 10, wherein training the initialized key point detection model using the sample model set, to obtain the trained key point detection model comprises:
performing key point detection on the sample model set using the initialized key point detection model, to obtain predicted three-dimensional space coordinates of predicted key points of each second sample three-dimensional model and the first sample three-dimensional model;
determining a difference between each predicted three-dimensional space coordinate and the three-dimensional space coordinates of each key point; and
determining a training loss of the initialized key point detection model using the difference, and updating a parameter of the initialized key point detection model using the training loss, to obtain the trained key point detection model.

12. A three-dimensional model processing method, performed by an electronic device, the method comprising:
obtaining a trained key point detection model, wherein the trained key point detection model is obtained by training using the three-dimensional model processing method of any one of claims 1 to 11;
obtaining a second to-be-registered three-dimensional model and a second reference three-dimensional model;
separately performing key point detection on the second to-be-registered three-dimensional model and the second reference three-dimensional model, to obtain key point information of the second to-be-registered three-dimensional model and key point information of the second reference three-dimensional model, wherein the key point information comprises: a patch index of a respective patch in which each key point is located, and barycentric coordinates of the patch; and
performing non-rigid deformation registration on the key point information of the second to-be-registered three-dimensional model by using the key point information of the second reference three-dimensional model as a registration reference object, to obtain a second registered three-dimensional model.

13. A three-dimensional model processing apparatus, comprising:
a detection module, configured to perform key point detection on a first sample three-dimensional model, to obtain a patch index of a respective patch in which each of a plurality of key points of the first sample three-dimensional model is located and barycentric coordinates of the key point;
the detection module, configured to determine three-dimensional space coordinates of each of the plurality of key points using the patch index and the barycentric coordinates of the key point;
a data enhancement module, configured to displace the three-dimensional space coordinates of the plurality of key points in the first sample three-dimensional model, to obtain a plurality of second sample three-dimensional models;
the data enhancement module, configured to combine the plurality of second sample three-dimensional models and the first sample three-dimensional model into a sample model set; and
a training module, configured to train an initialized key point detection model using the sample model set, to obtain a trained key point detection model, wherein the trained key point detection model is configured for performing key point detection on a first to-be-registered three-dimensional model, and a key point detection result of the first to-be-registered three-dimensional model being configured for performing non-rigid deformation registration.

14. A three-dimensional model processing apparatus, comprising:
a detection module, configured to obtain a trained key point detection model, wherein the trained key point detection model is obtained by training using the three-dimensional model processing method of any one of claims 1 to 11;
the detection module, configured to obtain a second to-be-registered three-dimensional model and a second reference three-dimensional model;
the detection module, configured to separately perform key point detection on the second to-be-registered three-dimensional model and the second reference three-dimensional model, to obtain key point information of the second to-be-registered three-dimensional model and key point information of the second reference three-dimensional model, wherein the key point information comprises: a patch index of a respective patch in which each key point is located, and barycentric coordinates of the patch; and
a registration module, configured to perform non-rigid deformation registration on the key point information of the second to-be-registered three-dimensional model by using the key point information of the second reference three-dimensional model as a registration reference object, to obtain a second registered three-dimensional model.

15. An electronic device, comprising:
a memory, configured to store computer-executable instructions; and
a processor, configured to perform, when executing the computer-executable instructions or computer programs stored in the memory, the three-dimensional model processing method of any one of claims 1 to 12.

16. A computer-readable storage medium having stored therein computer-executable instructions or computer programs which, when executed by a processor, cause the processor to perform the three-dimensional model processing method of any one of claims 1 to 12.
